# EUROPÄISCHE PATENTSCHRIFT

(11) **EP 3 119 482 B1**
(45) Veröffentlichungstag und Bekanntmachung des Hinweises auf die Patenterteilung: **16.10.2019**
(21) Anmeldenummer: 14725008.8
(22) Anmeldetag: 12.05.2014
(51) Int. Cl.: A63B 39/06, A63B 45/00, B29D 22/04, C08L 25/10, C08L 55/02, C08L 69/00, C08L 25/06

(54) **ZELLULOIDFREIER, KUGELFÖRMIGER HOHLKÖRPER UND DESSEN FERTIGUNG**
CELLULOID-FREE, SPHERICAL HOLLOW BODY AND FABRICATION THEREOF
CORPS CREUX SPHÉRIQUE EXEMPT DE CELLULOÏD ET FABRICATION DE CE CORPS

(30) Priorität: 21.03.2014 DE 102014004194
(43) Veröffentlichungstag der Anmeldung: 25.01.2017
(73) Patentinhaber: Weener Plastics Group B.V., 6716 AA Ede (NL)
(72) Erfinder: FLOCKENHAGEN, Gerhold, 26826 Weener-Kirchborgum (DE); PROX, Matthias, 26802 Moormerland (DE); QUAID, Liam, Clonmore, Dromcollogher Co. Limerick (IE)
(74) Vertreter: Wallinger, Michael
(86) Internationale Anmeldenummer: PCT/EP2014/001277
(87) Internationale Veröffentlichungsnummer: WO 2015/139712

(56) Entgegenhaltungen:
- EP-A1- 1 924 331
- DE-A1- 1 478 024
- DATABASE WPI Week 200346 Thomson Scientific, London, GB; AN 2003-483653 XP002729606, -& CN 1 410 250 A (LUO Y) 16. April 2003 (2003-04-16)
- DATABASE WPI Week 199239 Thomson Scientific, London, GB; AN 1992-316587 XP002729607, -& CN 1 057 790 A (GUANGZHOU STATIONARY & SPORTS) 15. Januar 1992 (1992-01-15)

## Beschreibung

Die vorliegende Erfindung betrifft einen zelluloidfreien kugelförmigen Hohlkörper, insbesondere einen Tischtennisball, welcher in seiner Schale zumindest ein styrolhaltiges Polymer aufweist. Die Erfindung wird im Zusammenhang mit Tischtennisbällen beschrieben, die mit den Vorschriften des internationalen Tischtennisverbands (*International Table Tennis Federation* - ITTF) konform sind. Es wird darauf hingewiesen, dass die Erfindung auch für Tischtennisbälle ohne ITTF-Zulassung, wie zum Beispiel Bälle mit einem Durchmesser von 44 mm, die im asiatischen Raum verwendet werden, oder Hobby- und Trainingsbälle, Anwendung finden kann.

Herkömmliche Tischtennisbälle sind aus Zelluloid gefertigt. Zelluloid ist ein Derivat der Cellulose und wird üblicherweise durch Reaktion von Cellulose-nitrat mit Campher hergestellt. Auch die vom internationalen Tischtennisverband festgelegten Standards bezüglich der mechanischen Eigenschaften von Tischtennisbällen rühren von der bisherigen, jahrzehntelangen Verwendung dieser Zelluloidbälle her. Zelluloid birgt aber den Nachteil, dass es brennbar ist und somit sowohl die großtechnische Herstellung als auch Transport und Lagerung von Zelluloidbällen erschwert und risikobehaftet ist. So können Zelluloidbälle aufgrund der Explosionsgefahr nur als Gefahrgut transportiert und gelagert werden. Es ist daher wünschenswert, Zelluloid durch ein anderes Material mit analogen oder verbesserten mechanischen Eigenschaften zu ersetzen. Daher hat die ITTF beschlossen, auf die zukünftige Verwendung von zelluloidhaltigen Tischtennisbällen in Wettkämpfen zu verzichten.

Aus dem Stand der Technik sind zelluloidfreie Tischtennisbälle bekannt. So beschreibt die EP 1 924 331 B1 einen zelluloidfreien Tischtennisball, dessen Hauptbestandteil ein organisches Polymer ist, welches in seiner Hauptkette Heteroatome aufweist. Die CN 102896788 A betrifft ein Verfahren zum Herstellen eines zelluloidfreien Tischtennisballs.

Die DE 1 478 024 A1 offenbart einen Tischtennisball aus Kunststoff, der durch besondere Parameterbereiche der Materialeigenschaften wie Brenngeschwindigkeit, Schlagfestigkeit und Wasseradsorption charakterisiert ist. Beispiel I der DE 1 478 024 beschreibt die Herstellung Tischtennisballs aus einem Copolymer von Acrylnitril, Butadien und Styrol.

Die CN 1 410 250 A offenbart Tischtennisbälle, die aus einem Blend von Polyethylen, modifiziertem Polystyrol und Polycarbonat hergestellt sind.

Die CN 1 057 790 A offenbart Tischtennisbälle aus einem Material von "High Impact Polystyrol", Polyethylen und Titandioxid

Die Schwierigkeit in der Bereitstellung zelluloidfreier Tischtennisbälle liegt darin, dass sich durch die jahrzehntelange Verwendung von Zelluloidbällen feste Standards herausgebildet haben, die von potentiellen neuen Materialen für Tischtennisbälle erfüllt werden müssen. Dies betrifft einerseits die mechanischen Eigenschaften der Tischtennisbälle, die, wie oben erwähnt, teilweise auch Berücksichtigung in den ITTF Richtlinien gefunden haben, als auch das "Spielgefühl" der Tischtennisbälle, welches für die Akzeptanz durch die Spieler von großer Bedeutung ist.

Der Erfindung liegt daher die Aufgabe zugrunde, zelluloidfreie Tischtennisbälle zur Verfügung zu stellen, die Tischtennisbällen aus Zelluloid zumindest gleichwertig sind.

Dies wird erfindungsgemäß durch die Lehre der unabhängigen Ansprüche erreicht. Zu bevorzugende Weiterbildungen der Erfindung sind Gegenstand der Unteransprüche.

Gemäß einem ersten Aspekt betrifft die Erfindung einen kugelförmigen Hohlkörper mit einem Durchmesser von 37 mm bis 45 mm und einem Gewicht von 2,5 g bis 3,5 g, welcher eine Schale und einen inneren

Hohlraum aufweist. Der erfindungsgemäße runde Hohlkörper hat insbesondere einen Durchmesser von 39,25 mm bis 40,75 mm und ein Gewicht von 2,6 g bis 2,85 g. Die Schale des runden Hohlkörpers weist eine Wandstärke von 0,2 mm bis 1,3 mm, insbesondere von 0,3 mm bis 0,8 mm auf. Die Schale des runden Hohlkörpers ist zelluloidfrei und weist zumindest ein styrolhaltiges Copolymer auf.

Im Sinne der vorliegenden Erfindung bedeutet der Begriff "zelluloidfrei", dass der Tischtennisball im Wesentlichen frei von Zelluloid ist, wobei das Vorliegen von geringfügigen Mengen an Zelluloid, beispielsweise als Verunreinigung oder in Spuren nichtsdestotrotz in einem im Sinne der Erfindung zelluloidfreien Produkt resultiert.

Im Rahmen der vorliegenden Erfindung wurde gefunden, dass zelluloidfreie Tischtennisbälle, welche zumindest ein styrolhaltiges Copolymer aufweisen, ein zu herkömmlichen Tischtennisbällen aus Zelluloid vergleichbares Spielgefühl vermitteln können. Insbesondere wurde gefunden, dass die erfindungsgemäßen zelluloidfreien Tischtennisbälle ein gutes, zu herkömmlichen Tischtennisbällen aus Zelluloid vergleichbares Spielgefühl bei dynamischen als auch langsamen Schlägen vermitteln können. Des Weiteren kann mit den erfindungsgemäßen zelluloidfreien Tischtennisbällen eine vergleichbare Wahrnehmung der Schläger-Ball-Übertragung sowie der Gegenspin-Rotationsübertragung erzielt werden. Auch der Spin der erfindungsgemäßen zelluloidfreien Tischtennisbälle wird von erfahrenen Spielern als vergleichbar zu jenen herkömmlicher Tischtennisbälle wahrgenommen. Insbesondere die subjektive Ballhärte und die Gleichmäßigkeit des Absprungs der erfindungsgemäßen zelluloidfreien Tischtennisbälle werden von erfahrenen Spielern als vorteilhaft empfunden.

Des Weiteren wurde gefunden, dass die erfindungsgemäßen zelluloidfreien Tischtennisbälle die durch den internationalen Tischtennisverband (International Table Tennis Federation - ITTF) festgelegten technischen Kriterien erfüllen. Insbesondere kann mit den erfindungsgemäßen Tischtennisbällen die vorgeschriebene mittlere Härte am Pol von 0,68 mm bis 0,81 mm, sowie die mittlere Härte an der Verbindungsnaht von 0,72 mm bis 0,83 mm erzielt werden. Die Härte wird, wie vom internationalen Tischtennisverband festgelegt, mittels einer Zwick Prüfmaschine bestimmt. Die Vorlast für die Härtemessung beträgt 0,5 N für 10 sec. Danach wird der Tischtennisball an einem Pol mittels eines Stahlstempels von 20 mm Durchmesser mit 50 N bei einer Belastungsgeschwindigkeit von 10 mm/min belastet. Hierbei wird der Tischtennisball von einer trichterförmigen Aufnahme mit einem Winkel von 45° unterstützt.

Weiterhin können durch das erfindungsgemäße Herstellungsverfahren Tischtennisbälle mit besonders gleichmäßiger Wandstärke bereitgestellt werden, wodurch die durch den internationalen Tischtennisverband festgelegte Höchstgrenze für die Standardabweichung der Härtemessung an Pol und Äquator desselben Balles sowie der Härtemessung an verschiedenen Bällen eingehalten werden kann. Das erfindungsgemäße Verfahren ermöglicht eine gleichmäßigere Wandstärke als für aus dem Stand der Technik bekannte Tischtennisbälle. Des Weiteren kann die Sprunghöhe erfindungsgemäßer zelluloidfreier Tischtennisbälle im vorgeschriebenen Bereich von 240 mm bis 260 mm bei einer Fallhöhe von 305 mm auf einen Standard-Stahlblock liegen. Mit den erfindungsgemäßen zelluloidfreien Tischtennisbällen kann auch die vorgeschriebene maximale Abweichung von 175 mm von der Mittellinie auf einer Rollstrecke von 1 m bei einer Rollgeschwindigkeit von etwa 0,3 m/sec eingehalten werden ("veer"-Test).

Des Weiteren wurde gefunden, dass die erfindungsgemäßen zelluloidfreien Tischtennisbälle bezüglich ihrer mechanischen Eigenschaften wie Stabilität, Bruchfestigkeit und die Vermeidung von Weißbruch gleichwertig wie oder besser als herkömmliche Tischtennisbällen aus Zelluloid sein können.

Vorzugsweise ist der Werkstoff, aus dem die Schale des Tischtennisballs gefertigt wird und der zumindest ein styrolhaltiges Copolymer aufweist, gekennzeichnet durch die folgenden Parameter:
- Elastizitätsmodul nach ISO 527 von 1500 MPa bis 3000 MPa, insbesondere von 1600 MPa bis 2500 MPa;
- Charpy Kerbschlagzähigkeit nach ISO 179 gemessen bei 23°C von 2 kJ/m² bis 50 kJ/m²;
- Kugeldruckhärte nach ISO 2039-1 von 50 MPa bis 150 MPa;
- Dichte nach ISO 1183 von 0,8 g/cm³ bis 1,2 g/cm³, insbesondere von 1 g/cm³ bis 1,1 g/cm³.

Die gewünschten mechanischen Eigenschaften des Werkstoffs können durch Kombination des styrolhaltigen Copolymers ausgewählt aus der Gruppe aufweisend Acrylnitril-Butadien-Styrol-Copolymer (ABS), Styrol-Butadien-Copolymer (SBC), Methylmethacrylat-Butadien-Styrol-Copolymer (MBS), Methylmethacrylat-Acrylnitril-Butadien-Styrol (MABS) mit mindestens einem zweiten organischen Polymer ausgewählt aus der Gruppe aufweisend Polycarbonat, Polystyrol und Styrol-Butadien-Copolymer (SBC), insbesondere durch die Verwendung eines Polymerblends aus dem styrolhaltigen Copolymer und dem zweiten organischen Polymer, erzielt werden. Polymerblends erlauben es auf relativ einfache Weise die Eigenschaften der Mischungspartner in vorteilhafter Weise zu kombinieren, und vorgegebene Eigenschaftsprofile optimal einzustellen. Der Fachmann wird dadurch in die Lage versetzt, die mechanischen Eigenschaften des so hergestellten Werkstoffes mit geringem Aufwand unter Verwendung standardisierter Messmethoden zu bestimmen.

Unter dem Begriff "Copolymer" im Sinne der Erfindung ist ein organisches Polymer zu verstehen, welches mindestens zwei verschiedenartige

Monomereinheiten aufweist. Copolymere können nach der Verteilung der Monomereinheiten innerhalb der Polymerkette unterteilt werden in: statistische Copolymere, in denen die Verteilung der Monomere in der Kette zufällig ist; Gradientcopolymere, mit prinzipiell zufälliger Verteilung der Monomere aber veränderlichem Anteil mindestens eines Monomers im Verlauf der Kette; alternierende Copolymere mit einer regelmäßigen Anordnung der Monomere entlang der Kette; Blockcopolymere, die längere Sequenzen oder Blöcke mindestens eines der Monomere aufweisen; und Pfropfcopolymere, bei denen Blöcke eines Monomers auf das Gerüst eines anderen Monomers aufgepfropft sind. Der Begriff "Copolymer" im Sinne der Erfindung umfasst all diese Unterklassen. Vorzugsweise ist das styrolhaltige Copolymer jedoch ein statistisches Copolymer, ein alternierendes Copolymer oder ein Blockcopolymer.

Unter dem Begriff "styrolhaltiges Copolymer" im Sinne der Erfindung ist daher ein organisches Polymer zu verstehen, welches sowohl Styrol-Monomere, als auch davon verschiedene Monomere aufweist. Das sytrolhaltige Copolymer ist vorzugsweise ein Thermoplast.

Unter dem Begriff "Thermoplast" im Sinne der Erfindung sind Kunststoffe zu verstehen, die sich in einem bestimmten Temperaturbereich reversibel verformen lassen.

Unter dem Begriff "Polymerblend" im Sinne der Erfindung sind Mischungen aus zwei oder mehr Polymeren zu verstehen.

Nachfolgend werden zu bevorzugende Weiterbildungen der Erfindung beschrieben.

Gemäß einer bevorzugten Weiterbildung weist das styrolhaltige Copolymer Olefin-Monomere, insbesondere Butadien-Monomere auf. Diese Weiterbildung bietet den Vorteil, dass solche Copolymere eine hohe Kerbschlagzähigkeit aufweisen können. Diese Weiterbildung bietet des Weiteren den Vorteil, dass die Elastizität des Copolymers verbessert werden kann.

Unter dem Begriff "Olefin" im Sinne der Erfindung sind acyclische und cyclische Kohlenwasserstoffe mit einer oder mehreren Kohlenstoff-KohlenstoffDoppelbindungen zu verstehen. Ausgenommen davon sind Kohlenwasserstoffe, die ausschließlich Doppelbindungen in aromatischen Strukturen aufweisen.

Erfindungsgemäß ist das styrolhaltige Copolymer ausgewählt aus der Gruppe aufweisend Acrylnitril-Butadien-Styrol-Copolymer (ABS), Styrol-Butadien-Copolymer (SBC), Methylmethacrylat-Butadien-Styrol-Copolymer (MBS), Methylmethacrylat-Acrylnitril-Butadien-Styrol (MABS). Dies bietet den Vorteil hoher Kerbschlagzähigkeit und Elastizität des Copolymers. Dies bietet den Vorteil einer großen Auswahl an kommerziell erhältlichen, gut charakterisierten Copolymeren dieser Unterklassen mit variierenden mechanischen Eigenschaften. Durch die Mischung verschiedener styrolhaltiger Polymere können die mechanischen Eigenschaften zudem modifiziert werden.

Gemäß einer bevorzugten Weiterbildung weist das styrolhaltige Copolymer eine Charpy Kerbschlagzähigkeit nach ISO 179 von 1 kJ/m² bis 30 kJ/m², insbesondere von 2 kJ/m² bis 20 kJ/m² gemessen bei 23°C auf. Diese Weiterbildung bietet den Vorteil hoher Widerstandsfähigkeit des Tischtennisballs gegen eine schlagartige Beanspruchung.

Gemäß einer bevorzugten Weiterbildung weist das styrolhaltige Copolymer einen Elastizitätsmodul nach ISO 527 von 1200 MPa bis 3000 MPa, insbesondere von 1500 MPa bis 2500 MPa auf. Diese Weiterbildung bietet den Vorteil, dass dadurch irreversible Materialschäden bei dynamischer Belastung, insbesondere Weißbruch, vermindert oder verhindert werden können. Diese Weiterbildung bietet des Weiteren den Vorteil, dass die Zugabe von Weichmachern zu dem styrolhaltigen Copolymer nicht zwingend erforderlich ist.

Gemäß einer bevorzugten Weiterbildung weist das styrolhaltige Copolymer eine Dichte nach ISO 1183 von 0,8 g/cm³ bis 1,2 g/cm³, insbesondere von 1 g/cm³ bis 1,1 g/cm³ auf. Diese Dichtebereiche haben sich im Hinblick auf die "Spielbarkeit" als vorteilhaft erwiesen. Dieser Dichtebereich hat sich insbesondere deshalb als vorteilhaft erwiesen, da eine höhere Dichte zu sehr geringen Wandstärken und dementsprechend zu Fertigungs- und Spielproblemen führt.

Erfindungsgemäß weist die Schale des Weiteren zumindest ein zweites organisches Polymer auf. Das zweite organische Polymer ist vorzugsweise ein Thermoplast. Diese Weiterbildung bietet den Vorteil, dass die mechanischen Eigenschaften des Tischtennisballs dadurch optimiert werden können. Insbesondere können durch die Verwendung von Polymerblends aus mindestens einem styrolhaltigen Copolymer und einem zweiten organischen Polymer die jeweiligen mechanischen Eigenschaften vorteilhaft kombiniert werden.

Erfindungsgemäß ist das *zweite* organische Polymer ein Homopolymer ausgewählt aus der Gruppe aufweisend Polycarbonat und Polystyrol. Unter dem Begriff "Homopolymer" im Sinne der Erfindung ist ein organisches Polymer zu verstehen, welches ausschließlich gleichartige Monomere, also zum Beispiel ausschließlich Styrol-Monomere, aufweist. Diese Weiterbildung bietet den Vorteil, dass dadurch die Eigenschaften des Tischtennisballs gezielt variiert werden können. Insbesondere können durch die Verwendung eines entsprechenden Polymerblends aus mindestens einem styrolhaltigen Copolymer und einem zweiten organischen Polymer ausgewählt aus Polycarbonat und Polystyrol die vorteilhaften mechanischen Eigenschaften des Copolymers, insbesondere die hohe Kerbschlagzähigkeit und die Elastizität, mit der hohen Härte der genannten Homopolymere kombiniert werden.

Gemäß einer bevorzugten Ausgestaltung ist das zumindest eine styrolhaltige Copolymer ein Acrylnitril-Butadien-Styrol-Copolymer (ABS) und das zweite organische Polymer ein Polycarbonat. Gemäß einer weiteren bevorzugten Ausgestaltung ist das zumindest eine styrolhaltige Copolymer ein Styrol-Butadien-Copolymer (SBC) und das zweite organische Polymer ein Polystyrol.

Diese Ausgestaltung bietet den Vorteil erhöhter Flexibilität und Elastizität. Insbesondere die Sprunghöhe und das Absprungverhalten des Tischtennisballes können hierdurch verbessert werden.

Gemäß einer bevorzugten Ausgestaltung ist das zumindest eine styrolhaltige Copolymer ein Acrylnitril-Butadien-Styrol-Copolymer (ABS) und das zweite organische Polymer ein Styrol-Butadien-Copolymer (SBC).

Gemäß einer bevorzugten Weiterbildung weist das *zweite* organische Polymer eine Charpy Kerbschlagzähigkeit nach ISO 179 von 1 bis 10 auf. Gemäß einer bevorzugten Weiterbildung weist das zweite organische Polymer eine Härte Shore D nach ISO 868 von 65 bis 80 auf. Gemäß einer bevorzugten Weiterbildung weist das zweite organische Polymer einen Elastizitätsmodul von 1.200 bis 2.000 MPa auf

Gemäß einer bevorzugten Weiterbildung beträgt das Mischungsverhältnis des styrolhaltigen Copolymers und des zweiten organischen Polymers von 1:0,05 bis 1:1, insbesondere von 1:0,1 bis 1:0,80, besonders bevorzugt von 1:0,25 bis 1:0,75. Diese Weiterbildung bietet den Vorteil, dass das entsprechende Polymerblend aus styrolhaltigem Copolymer und zweitem organischen Polymer verbesserte mechanische Eigenschaften bezüglich Elastizität, Kerbschlagzähigkeit und Härte aufweist. Bevorzugt liegt der Elastizitätsmodul nach ISO 527 eines Polymerblends aus einem styrolhaltigen Copolymer und einem zweiten organischen Polymer im genannten Mischungsverhältnis in einem Bereich von 1500 MPa bis 3000 MPa. Die Charpy Kerbschlagzähigkeit nach ISO 179 gemessen bei 23°C eines entsprechenden

Polymerblends liegt vorzugsweise in einem Bereich von 2 kJ/m² bis 50 kJ/m² und die Kugeldruckhärte nach ISO 2039-1 im Bereich von 50 MPa bis 150 MPa liegen.

Gemäß einer bevorzugten Ausgestaltung dieser Weiterbildung ist das zumindest eine styrolhaltige Copolymer ein Acrylnitril-Butadien-Styrol-Copolymer (ABS) und das zweite organische Polymer ein Polycarbonat und das Mischungsverhältnis von ABS zu Polycarbonat beträgt 0,65 bis 0,75 zu 0,25 bis 0,35. Die Mischung von ABS und Polycarbonat in dem angegebenen Verhältnis ergibt einen Werkstoff mit den folgenden, vorteilhaften Eigenschaften:
- Elastizitätsmodul nach ISO 527 von 2000 MPa;
- Charpy Kerbschlagzähigkeit nach ISO 179 gemessen bei 23°C von 40 kJ/m²;
- Kugeldruckhärte nach ISO 2039-1 von 85 MPa;
- Dichte nach ISO 1183 von 1,07 g/cm³.

Dieser Werkstoff vereint daher die gute Schlagzähigkeit des ABS und die hohe Härte des Polycarbonats in optimaler Weise, sodass daraus hergestellte Tischtennisbälle eine hohe mechanische Beanspruchbarkeit in einem weiten Temperaturbereich aufweisen. Das Eigenschaftsprofil bleibt sowohl während des Transports als auch während des Spiels bei unterschiedlichsten Bedingungen nahezu konstant.

Gemäß einer bevorzugten Weiterbildung weist die Schale zumindest ein weiteres Additiv ausgewählt aus der Gruppe aufweisend Fasern, Plättchen, sphärische Partikel, anorganische Stoffe und organische Stoffe, insbesondere Weichmacher und/oder Farbpigmente, auf. Fasern, Plättchen und sphärische Partikel können sowohl organisch als auch anorganisch sein. Geeignete Weichmacher, d.h. Stoffe, die dem Ursprungsrohstoff zumindest partiell "elastische" Eigenschaften verleihen, sind durch einen Elastizitätsmodul von weniger als 500 MPa sowie eine hohe Bruchdehnung und Kerbschlagzähigkeit und eine geringe Härte gekennzeichnet. Diese Eigenschaften werden in der Regel durch Elastomere oder niedrigmolekulare Polymere erzielt. Diese Weiterbildung bietet den Vorteil, dass die Stabilität des Tischtennisballs, insbesondere die Widerstandsfähigkeit gegenüber dynamischer Beanspruchung, erhöht werden kann und dass die optischen Eigenschaften wie Farbe und Glanz verbessert werden können. Diese Weiterbildung bietet des Weiteren den Vorteil, dass irreversible Materialschäden wie Weißbruch verhindert werden können.

Gemäß einem zweiten Aspekt betrifft die Erfindung ein Verfahren zur Herstellung eines erfindungsgemäßen runden Hohlkörpers.

Die Herstellung eines erfindungsgemäßen runden Hohlkörpers erfolgt vorzugsweise durch Spritzgießen des Materials für die Schale. Die Technik des Spritzgießens, insbesondere von Kunststoff oder kunststoffhaltigem Material, ist bekannt und wird daher hier nicht weiter erläutert.

Bei einem besonders bevorzugten Herstellungsverfahren für den runden Hohlkörper werden in einem ersten Schritt zwei im Wesentlichen gleiche, halbkugelförmige Halbschalen spritzgegossen. Derartige Halbschalen weisen unter Umständen geringfügige Hinterschneidungen auf und lassen sich somit sehr einfach spritzgießen. Weiterhin können für die beiden Halbschalen dieselbe Spritzgussform oder zwei baugleiche Spritzgussformen verwendet werden, was den Herstellungsaufwand weiter verringert.

Die beiden Halbschalen werden dann in einem zweiten Schritt entlang ihrer Ränder, an welchen die Halbschalen auch ihren größten Durchmesser aufweisen, miteinander zu einem Hohlkörper gefügt. Die kreisförmige Fügestelle bildet somit einen Großkreis auf dem herzustellenden im runden Hohlkörper.

Vorzugsweise erfolgt das Fügen der beiden Halbschalen, während sich wenigstens eine, vorzugsweise beide Halbschalen nach ihrer Herstellung durch den Spritzgießprozess in einer Form befinden. Falls sich beide Halbschalen in einer Form befinden sollen, setzt dies voraus, dass die beiden Formen relativ zueinander beweglich sind, um die in ihnen befindlichen Halbschalen an deren Rändern zum Fügen miteinander in Kontakt zu bringen. Durch das Belassen wenigstens einer Halbschale in einer Form lässt sich beim Fügen eine besonders gute Ausrichtung der beiden Halbschalen gegeneinander erreichen und eine Verformung der Halbschalen beim Fügen weitgehend vermeiden.

In einer besonders bevorzugten Ausführung des Herstellungsverfahrens werden die beiden Halbschalen durch Verschweißen gefügt, insbesondere durch, Ultraschallschweißen, Vibrationsschweißen, Heizelementschweißen Laserschweißen oder Rotationsschweißen. In einer weiteren besonders bevorzugten Ausführung werden die beiden Halbschalen durch Verkleben gefügt.

Beim Fügen der beiden Halbschalen ist es möglich, dass auf der Innen- und/oder Außenseite des runden Hohlkörpers eine Materialverdickung entsteht, insbesondere eine Schweißwulst, eine Klebstoffwulst oder eine Wulst aus anderweitig verformtem, beispielsweise aufgequollenem oder komprimiertem Schalenmaterial. Eine solche Materialverdickung kann sich auf die physikalischen Eigenschaften des Hohlkörpers wie dessen Flug- oder Impulseigenschaften auswirken.

Daher ist der Fügeprozess vorzugsweise derart gestaltet, dass eine beim Fügen der beiden Halbschalen auf der Innenseite des Hohlkörpers entstandene Materialverdickung in jede Richtung eine Ausdehnung von höchstens dem Fünffachen, vorzugsweise höchstens dem Zweieinhalbfachen, weiter vorzugsweise höchstens dem Eineinhalbfachen der mittleren Wandstärke des Hohlkörpers aufweist. Dabei ist es weiter bevorzugt, dass eine Schweißwulst eine Ausdehnung von höchstens dem Fünffachen und eine Klebewulst eine Ausdehnung von höchstens dem Zweieinhalbfachen der mittleren Wandstärke des Hohlkörpers aufweist.

In einer weiteren bevorzugten Ausführung weist das Herstellungsverfahren den weiteren Schritt einer Nachbearbeitung des Hohlkörpers auf, insbesondere durch Stanzen, Schleifen, Strahlen, Läppen, Polieren, Rommeln und/oder Beschichten. Das Rommeln und/oder Strahlen erfolgt dabei vorzugsweise mit wenigstens einem anorganischen, organischen oder polymeren Stoff und das Beschichten mit wenigstens einem löslichen oder unlöslichen Stoff.

Hierbei wird unter Läppen ein spanendes Verfahren zur Glättung von Oberflächen mit ungebundenem, d. h. losem, in einer Paste oder Flüssigkeit verteiltem Korn verstanden. Beim Rommeln werden die zu bearbeitenden Teile gemeinsam mit Putz- oder Entgratungsmitteln in eine sich drehende Trommel gegeben und durch den Kontakt der Teile untereinander und mit den Putz- oder Entgratungsmitteln während der Umwälzbewegung in der Trommel bearbeitet.

Vorzugsweise wird bei der Nachbearbeitung des Hohlkörpers eine beim Fügen der beiden Halbschalen auf der Außenseite des Hohlkörpers entstandene Materialverdickung wenigstens teilweise entfernt. Die Nachbearbeitung kann jedoch auch der Oberflächenbehandlung des gesamten Hohlkörpers dienen, um vorzugsweise seine geometrischen Eigenschaften wie die Rundheit, seine optischen Eigenschaften wie die Farbe oder den Glanz, seine mechanischen Eigenschaften wie die Rauigkeit, die Griffigkeit oder den Luftwiderstand, seine chemischen Eigenschaften wie die Schmutz- oder Feuchtigkeitsabweisung zu beeinflussen. Die Nachbearbeitung der Oberfläche kann weiterhin die Übertragbarkeit von Drehmomenten auf den Hohlkörper erhöhen und seine Flugeigenschaften verbessern.

Vorzugsweise ergibt sich durch die Nachbearbeitung ein runder Hohlkörper mit einer Rundheitstoleranz von maximal 0,2 ± 0,06 mm. Die Oberflächengüte der Außenfläche des runden Hohlkörpers beträgt vorzugsweise zwischen R*ₐ* = 1,0 und R*ₐ* = 5,0.

Das erfindungsgemäße Herstellungsverfahren ergibt vorzugsweise einen runden Hohlkörper mit einer Wandstärke, deren Toleranz außerhalb einer möglicherweise an der Fügestelle vorhandenen Materialverdickung kleiner als 0,1mm ist.

Wenn die Toleranzen für die Rundheit bzw. für die Wandstärke innerhalb der angegebenen Bereiche liegen, werden die Flugeigenschaften, die Impulseigenschaften hinsichtlich Höhe und Flugbahn sowie deren Reproduzierbarkeit nicht oder kaum nachteilig beeinflusst. Insbesondere lässt sich dadurch eine gleichmäßige Flugbahn des Hohlkörpers ohne, oder mit nicht signifikanter, taumelnder Bewegungen erreichen.

Vorzugsweise werden bei der Herstellung des runden Hohlkörpers durch das erfindungsgemäße Herstellungsverfahren eine gleichmäßige Gewichtsverteilung und eine gleichmäßige Geometrie der Schale erreicht, wobei die Schwerpunkts-Trägheitsradien für die drei Achsen x, y und z um maximal 0,5 mm, vorzugsweise um 0,25 mm, differieren und die Differenz zwischen maximalem und minimalem Außendurchmesser des Hohlkörpers in verschiedenen Raumrichtungen maximal 0,5 mm, vorzugsweise 0,3 mm, beträgt.

Um eine gleichmäßige Gewichtsverteilung zu erreichen, kann mit dem erfindungsgemäßen Herstellungsverfahren auch die Innen- und/oder Außengeometrie des Hohlkörpers gezielt variiert werden. So könnte beispielsweise die Wandstärke zu den Polen des runden Hohlkörpers hin gezielt geringfügig vergrößert werden, um das größere Gewicht einer an der Innenseite des Hohlkörpers an der Fügestelle am Äquator entstandenen Materialverdickung auszugleichen.

Die Herstellung der halbkugelförmigen Halbschalen kann statt durch Spritzgießen in einem weiteren bevorzugten Herstellungsverfahren auch durch Schleudergießen erfolgen. Dabei wird eine halbkugelförmige Gussform, vorzugsweise um die Symmetrieachse der Halbkugel, in Rotation versetzt und das flüssige Kunststoffmaterial in die rotierende Form eingespritzt. Durch die Reibung an der Innenwand der Form wird das Kunststoffmaterial ebenfalls in Rotation versetzt und durch die Zentrifugalkraft nach außen gegen die Innenwand der Form gepresst. Dadurch bildet sich in der Form eine dünnwandige Halbschale, welche nach dem Abkühlen erstarrt.

Alternativ zu einer Herstellung durch Spritzgießen oder Schleudergießen können die beiden Halbschalen in einem weiteren bevorzugten Herstellungsverfahren auch durch Umformen von zunächst flachen, vorzugsweise kreisförmigen Kunststoffscheiben hergestellt werden.

In diesem Herstellungsverfahren wird zunächst eine Kunststoffplatte oder -folie extrudiert oder kalandriert, indem der geschmolzene Kunststoff unter Druck durch eine flache Düse gepresst bzw. gewalzt wird und die so entstandene Platte oder Folie abgekühlt wird und erhärtet. Aus dieser Platte oder Folie werden dann, insbesondere kreisförmige, Scheiben vorzugsweise durch Ausstanzen, Ausschneiden oder Aussägen herausgetrennt.

Vorzugsweise wird ein Bereich der Platte oder Folie, vorzugsweise durch Pressen der Platte oder Folie mit einem geeigneten Stempel, in der Wandstärke profiliert .Dadurch kann zu dem oben erläuterten Zweck im Bereich der Pole des kugelförmigen Hohlkörpers eine gleichmäßige oder profilierte Wandstärke erreicht werden.

Die Scheiben werden dann vorzugsweise durch Tiefziehen oder durch Vakuumverformen in einer Halbkugelform zu Halbschalen umgeformt. Zu diesem Zweck werden die Scheiben wieder aufgeheizt, um sie zu erweichen, und mit einem Stempel in die Halbkugelform gepresst und/oder durch Unterdruck an die Innenwand der Form gesaugt.

Die zu Halbschalen umgeformten Scheiben werden vorzugsweise noch nachbearbeitet, indem ihr Rand mit einem Schneidwerkzeug, vorzugsweise mit einem Messer, einem Wasserstrahl oder einer Laser-Schneidvorrichtung, entlang einer Kreislinie abgeschnitten wird, welche dem Rand der herzustellenden

Halbkugel bzw. später dem Äquator des kugelförmigen Hohlkörpers entspricht.

Auf diese Weise ergeben sich halbkugelförmige Halbschalen, welche wie oben beschrieben zu einem kugelförmigen Hohlkörper zusammengefügt werden können.

In einem weiteren bevorzugten Herstellungsverfahren für den kugelförmigen Hohlkörper wird dieser nicht aus zwei Halbschalen zusammengefügt, sondern einstückig, vorzugsweise durch Spritzblasen, hergestellt.

Beim Spritzblasen wird ein Vorformling, welcher beispielsweise durch Spritzgießen hergestellt worden ist, in einer hohlkugelförmigen Spritzblasform erhitzt und durch das Einblasen von Druckluft "aufgeblasen". Nach dem Abkühlen und Erstarren des Kunststoffs wird die aus zwei Teilen, im vorliegenden Fall vorzugsweise aus zwei halbkugelförmigen Halbschalen, bestehende Spritzblasform geöffnet und der kugelförmige Hohlkörper entnommen.

Schließlich wird ein evtl. an der ringförmigen Öffnungsstelle der Form verbliebener Grat auf der Außenseite des Hohlkörpers vorzugsweise durch eines der oben beschriebenen Verfahren zum Entfernen einer Materialverdickung auf der Außenseite des Hohlkörpers entfernt.

Bei der Herstellung eines kugelförmigen Hohlkörpers durch Spritzblasen ist es günstig, die Einblasöffnung für die Druckluft mit einem möglichst geringen Durchmesser vorzusehen, so dass diese Öffnung noch während der Herstellung des Hohlkörpers mit flüssigem Kunststoff geschlossen werden kann oder sich durch den Fluss des umgebenden Kunststoffs sogar von selbst schließt.

In einem weiteren bevorzugten Herstellungsverfahren für den kugelförmigen Hohlkörper wird dieser nicht aus zwei Halbschalen zusammengefügt, sondern einstückig, vorzugsweise durch Extrusionsblasen, hergestellt.

Beim Extrusionsblasen wird ein Schlauch, welcher beispielsweise durch Extrudieren hergestellt worden ist, in einer hohlkugelförmigen Blasform erhitzt und durch das Einblasen von Druckluft oder einem anderen Gas "aufgeblasen". Nach dem Abkühlen und Erstarren des Kunststoffs wird die aus zwei Teilen, im vorliegenden Fall vorzugsweise aus zwei halbkugelförmigen Halbschalen, bestehende Extrusionsblasform geöffnet und der kugelförmige Hohlkörper entnommen.

Schließlich wird ein evtl. an der ringförmigen Öffnungsstelle der Form verbliebener Grat auf der Außenseite des Hohlkörpers vorzugsweise durch eines der oben beschriebenen Verfahren zum Entfernen einer Materialverdickung auf der Außenseite des Hohlkörpers entfernt.

Bei der Herstellung eines kugelförmigen Hohlkörpers durch Extrusionsblasen ist es günstig, die Einblasöffnung für die Druckluft mit einem möglichst geringen Durchmesser vorzusehen, so dass diese Öffnung noch während der Herstellung des Hohlkörpers mit flüssigem Kunststoff geschlossen werden kann oder sich durch den Fluss des umgebenden Kunststoffs sogar von selbst schließt.

In einem weiteren bevorzugten Herstellungsverfahren kann der kugelförmige Hohlkörper auch einstückig durch Schleudergießen hergestellt werden. Dabei wird der flüssige Kunststoff in der benötigten Menge in eine, vorzugsweise aus zwei Halbschalen gebildete, hohlkugelförmige Form gegossen. Dann wird die Form geschlossen und, vorzugsweise gleichzeitig und möglichst gleichmäßig um alle drei Achsen, in Rotation versetzt.

Analog zu der obigen Beschreibung des Schleudergießens von Halbschalen bildet sich an der Innenwand der Form ein kugelförmiger Hohlkörper, der nach dem Erstarren und dem Öffnen der Form aus dieser entnommen werden kann. Ein evtl. an der ringförmigen Öffnungsstelle der Form verbliebener Grat auf der Außenseite des Hohlkörpers kann wieder wie oben beschrieben entfernt werden.

Gemäß einem dritten Aspekt betrifft die Erfindung die Verwendung eines styrolhaltigen Copolymers, insbesondere eines styrolhaltigen Copolymers welches Olefin-Monomere, insbesondere Butadien-Monomere, aufweist, zur Herstellung eines zelluloidfreien, sphärischen, insbesondere kugelförmigen Hohlkörpers mit einem Durchmesser von 37 mm bis 45 mm und einem Gewicht von 2,5 g bis 3,5 g.

Das styrolhaltige Copolymer ist ausgewählt aus der Gruppe aufweisend Acrylnitril-Butadien-Styrol-Copolymer (ABS), Styrol-Butadien-Copolymer (SBC), Methylmethacrylat-Butadien-Styrol-Copolymer (MBS), Methylmethacrylat-Acrylnitril-Butadien-Styrol (MABS). Dies bietet den Vorteil einer Kombination hoher Kerbschlagzähigkeit und Elastizität des Copolymers. Des Weiteren bietet sich der Vorteil einer großen Auswahl an kommerziell erhältlichen, gut charakterisierten
Copolymeren dieser Unterklassen mit variierenden mechanischen Eigenschaften.

Erfindungsgemäß liegt das styrolhaltige Copolymer in Form eines Polymerblends vor, welches des Weiteren zumindest ein zweites organisches Polymer aufweist, insbesondere wobei das zweite organische Polymer ein Homopolymer ausgewählt aus der Gruppe aufweisend Polycarbonat und Polystyrol ist. Dies bietet den Vorteil, dass die mechanischen Eigenschaften des Tischtennisballs dadurch optimiert werden können. Insbesondere können durch die Verwendung von Polymerblends aus mindestens einem styrolhaltigen Copolymer und einem zweiten organischen Polymer die relevanten mechanischen Eigenschaften ("Härte" und "Elastizität") vorteilhaft kombiniert werden.

Gemäß einer bevorzugten Ausgestaltung ist das zumindest eine styrolhaltige Copolymer ein Acrylnitril-Butadien-Styrol-Copolymer (ABS) und das zweite organische Polymer ein Polycarbonat. Diese Ausgestaltung bietet den Vorteil, dass dadurch die vorteilhaften mechanischen Eigenschaften des ABS Copolymers, insbesondere die hohe Kerbschlagzähigkeit und die Elastizität, mit der hohen Härte des Polycarbonats kombiniert werden.

Gemäß einer bevorzugten Ausgestaltung dieser Weiterbildung beträgt das Mischungsverhältnis von ABS zu Polycarbonat 0,8 bis 1,5 (ABS) zu 0,1 bis 0,5 (Polycarbonat), vorzugsweise 0,9 bis 1,1 zu 0,2 bis 0,3, insbesondere 1,0 zu 0,25. Daraus ergibt sich ein Polymerblend mit besonders vorteilhaften, mechanischen Eigenschaften.

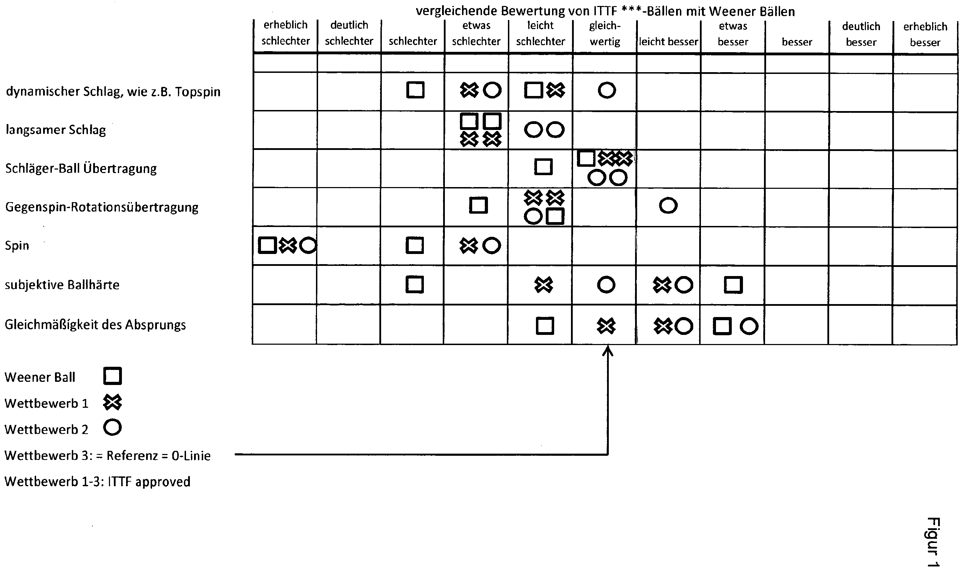

Weitere Vorteile, Merkmale und Anwendungsmöglichkeiten der vorliegenden Erfindung ergeben sich aus der nachfolgenden Beschreibung in Zusammenhang mit der Figur 1.

Es zeigt Fig. 1 die Bewertung des Spielgefühls eines Tischtennisballs aus 25-35% Polycarbonat und 75-65% ABS durch zwei erfahrene Spieler im Vergleich zu Zelluloidbällen und zelluloidfreien Bällen des Standes der Technik.

### Beispiele

### Beispiel 1: Fertigung und Charakterisierung zelluloidfreier Tischtennisbälle

Tischtennisbälle mit einem Durchmesser von etwa 40 mm wurden durch Spritzgießen jeweils zweier halbkugelförmiger Halbschalen und anschließendem Fügen der beiden Halbschalen durch Verschweißen hergestellt. Als Werkstoff wurden verschiedene styrolhaltige Copolymere und Polymerblends aus einem styrolhaltigen Copolymer und einem zweiten organischen Polymer verwendet. Die so hergestellten Tischtennisbälle wurden mit Tischtennisbällen aus Zelluloid und zelluloidfreien Tischtennisbällen des Standes der Technik bezüglich verschiedener ITTF-Kriterien wie Gewicht, Durchmesser, Sphärizität, Abweichung, bei geradlinigem "Einrollen" auf einer ebenen Fläche, von einer Mittellinie ("veer"), Sprunghöhe und Härte verglichen.

Die verwendeten Werkstoffe und ihre mechanischen Eigenschaften sind in Tabelle 1 aufgelistet.

| | | | | **Charpy Kerbschlagzähigkeit ISO 179 bei 23°C [kJ/m²]** | **Kugeldruckhärte ISO 2039-1 [Mpa]** |
|---|---|---|---|---|---|
| **Tischtennisball** | **Hauptbestandteil Polymer** | **Dichte ISO 1183 [g/cm3]** | **Elastizitätsmodul ISO 527 [MPa]** | | |
| | **Polymer-Mischungen mit bestimmten Mischungsverhältnis:** | | | | |
| 6 | Acrylnitril-Butadien-Styrol-Copolymer + Polycarbonat | 1,07 | 2000 | 40 | 85 |
| 7 | Styrol-Butadien-Copolymer 1 + 30% Polystyrol | | | | |
| 8 | Styrol-Butadien-Copolymer 1 + 50% Polystyrol | | | | |
| 9 | Styrol-Butadien Copolymer 2 + 30% Polystyrol | | | | |
| 10 | Styrol-Butadien Copolymer 2+ 50% Polystyrol | | | | |

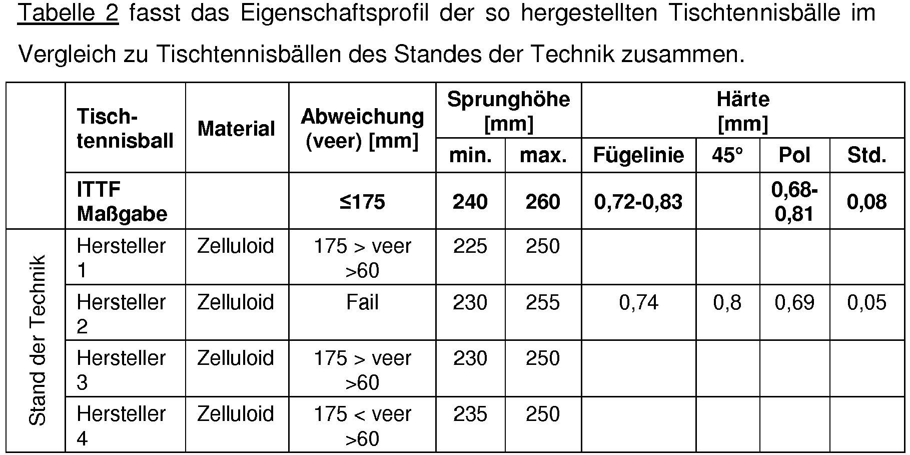

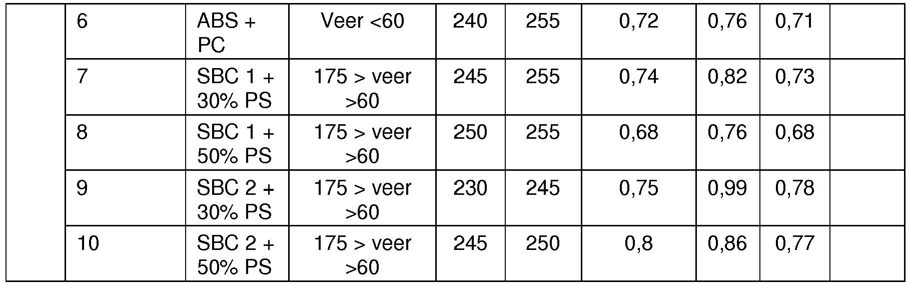

### Spielgefühl

Der Tischtennisball aus Beispiel 6 (25-35% PC + 75-65% ABS) wurde von zwei unabhängigen, erfahrenen Tischtennisspielern hinsichtlich seines Spielgefühls mit dem Nittaku-Zelluloid-Ball, einem der derzeit besten Zelluloid-Bälle des Marktes, verglichen. Die Ergebnisse sind in Figur 1 dargestellt. Dabei repräsentieren die zwei Quadrate/Kreuze/Kreise pro Zeile jeweils die Wertung der beiden Spieler.

Der Nullpunkt der Skala gibt die Testergebnisse in den verschiedenen Kategorien für den Zelluloidball an. Der Tischtennisball aus (25-35% PC + 75-65% ABS) vermittelt ein zu dem Zelluloidball vergleichbares Spielgefühl. Dies betrifft insbesondere das Spielgefühl bei dynamischem und langsamem Schlag sowie die Spielerwahrnehmung der Schläger-Ball-Übertragung, der Gegenspin-Rotationsübertragung, der subjektiven Ballhärte und der Gleichmäßigkeit des Absprungs. Der Spin des zelluloidfreien Balls wurde gegenüber dem Zelluloid-Ball als deutlich schlechter bewertet. Insgesamt wurde von den Spielern jedoch angegeben, dass sich der Tischtennisball aus (25-35% PC + 75-65% ABS) problemlos spielen lässt, und dass dieser im Wesentlichen vergleichbar mit den von der ITTF freigegebenen Bällen ist.

## Patentansprüche

1. Kugelförmiger Hohlkörper mit einem Durchmesser von 37 mm bis 45 mm, insbesondere mit einem Durchmesser von 39,7 mm bis 40,75 mm, und einem Gewicht von 2,5 g bis 3,5 g, insbesondere mit einem Gewicht von 2,6 g bis 2,85 g, aufweisend eine Schale und einen inneren Hohlraum, wobei die Schale eine Wandstärke von 0,2 mm bis 1,3 mm, insbesondere von 0,3 mm bis 0,8 mm aufweist,
**dadurch gekennzeichnet, dass** die Schale zelluloidfrei ist und zumindest ein styrolhaltiges Copolymer aufweist, wobei
das styrolhaltige Copolymer Olefin-Monomere, insbesondere Butadien-Monomere aufweist, wobei
das styrolhaltige Copolymer ausgewählt ist aus der Gruppe aufweisend Acrylnitril-Butadien-Styrol-Copolymer (ABS), Styrol-Butadien-Copolymer (SBC), Methylmethacrylat-Butadien-Styrol-Copolymer (MBS), Methylmethacrylat-Acrylnitril-Butadien-Styrol (MABS), wobei
die Schale des Weiteren zumindest ein zweites organisches Polymer aufweist, wobei
das zweite organische Polymer ein Homopolymer ausgewählt aus der Gruppe aufweisend Polycarbonat und Polystyrol ist oder ein Copolymer von Styrol-Butadien-Copolymer (SBC) ist.

2. Kugelförmiger Hohlkörper gemäß Anspruch 1,
**dadurch gekennzeichnet, dass** das styrolhaltige Copolymer eine Charpy Kerbschlagzähigkeit nach ISO 179 von 1 kJ/m² bis 50 kJ/m², insbesondere von 2 kJ/m² bis 20 kJ/m² gemessen bei 23°C aufweist.

3. Kugelförmiger Hohlkörper gemäß mindestens einem der vorhergehenden Ansprüche,
**dadurch gekennzeichnet, dass** das styrolhaltige Copolymer einen Elastizitätsmodul nach ISO 527 von 1200 MPa bis 3000 MPa, insbesondere von 1500 MPa bis 2500 MPa aufweist.

4. Kugelförmiger Hohlkörper gemäß mindestens einem der vorhergehenden Ansprüche,
**dadurch gekennzeichnet, dass** das styrolhaltige Copolymer eine Dichte nach ISO 1183 von 0,8 g/cm³ bis 1,2 g/cm³, insbesondere von 1 g/cm³ bis 1,1 g/cm³ aufweist.

5. Kugelförmiger Hohlkörper gemäß Anspruch 1,
**dadurch gekennzeichnet, dass** das zweite organische Polymer eine Charpy Kerbschlagzähigkeit nach ISO 179 von 1 kJ/m² bis 10 kJ/m² und eine Härte Shore D nach ISO 868 von 65 bis 80 aufweist.

6. Kugelförmiger Hohlkörper gemäß mindestens einem der Ansprüche 1 oder 5,
**dadurch gekennzeichnet, dass** das Mischungsverhältnis des styrolhaltigen Copolymers und des zweiten organischen Polymers von 1:0,05 bis 1:1, insbesondere von 1:0,25 bis 1:0,75 beträgt.

7. Kugelförmiger Hohlkörper gemäß mindestens einem der vorhergehenden Ansprüche,
**dadurch gekennzeichnet, dass** die Schale zumindest ein weiteres Additiv ausgewählt aus der Gruppe aufweisend Fasern, Plättchen, sphärische Partikel, anorganische Stoffe und organische Stoffe, insbesondere Weichmacher und/oder Farbpigmente, aufweist.

8. Verfahren zur Herstellung eines kugelförmigen Hohlkörpers nach einem der vorherigen Ansprüche, welches die Schritte aufweist:
- Herstellen von zwei im Wesentlichen gleichen, im Wesentlichen halbkugelförmigen Halbschalen durch Spritzgießen
- Fügen der beiden Halbschalen entlang ihrer Ränder zu einem Hohlkörper.

9. Herstellungsverfahren nach Anspruch 8,
**dadurch gekennzeichnet, dass** das Fügen der beiden Halbschalen durch Verschweißen, insbesondere durch Ultraschallschweißen, Vibrationsschweißen, Heizelementschweißen, Laserschweißen oder Rotationsschweißen, oder durch Verkleben erfolgt.

10. Herstellungsverfahren nach Anspruch 8 oder 9,
**dadurch gekennzeichnet, dass** eine beim Fügen der beiden Halbschalen auf der Innenseite des Hohlkörpers entstandene Materialverdickung in jeder Richtung eine Ausdehnung von höchstens dem Fünffachen, vorzugsweise höchstens dem Zweieinhalbfachen, weiter vorzugsweise höchstens dem Eineinhalbfachen der mittleren Wandstärke des Hohlkörpers aufweist.

11. Herstellungsverfahren nach einem der Ansprüche 8 bis 10,
**gekennzeichnet durch** den weiteren Schritt einer Nachbearbeitung des Hohlkörpers, insbesondere durch Stanzen, Schleifen, Strahlen, Läppen, Polieren, Rommeln mit anorganischen, organischen und/oder polymeren Stoffen, Strahlen mit anorganischen, organischen und/oder polymeren Stoffen und/oder Beschichten mit wenigstens einem löslichen oder unlöslichen Stoff.

12. Herstellungsverfahren nach Anspruch 11,
**dadurch gekennzeichnet, dass** bei der Nachbearbeitung des Hohlkörpers eine beim Fügen der beiden Halbschalen auf der Außenseite des Hohlkörpers entstandene Materialverdickung wenigstens teilweise entfernt wird.

13. Kugelförmiger Hohlkörper, hergestellt durch ein Herstellungsverfahren nach einem der Ansprüche 8 bis 12,
**gekennzeichnet durch** wenigstens eine der folgenden Eigenschaften:
- Rundheitstoleranz von maximal 0,2 ± 0,06 mm,
- Oberflächengüte der Außenfläche zwischen Rₐ = 1,0 und Rₐ = 5,0,
- Differenz der Schwerpunkts-Trägheitsradien für die drei Achsen x, y und z von maximal 0,25 mm,
- Differenz der Außendurchmesser in verschiedenen Raumrichtungen von maximal 0,3 mm.

14. Verwendung eines styrolhaltigen Copolymers zur Herstellung eines zelluloidfreien, kugelförmigen Hohlkörpers mit einem Durchmesser von 37 mm bis 45 mm und einem Gewicht von 2,5 g bis 3,5 g,
**dadurch gekennzeichnet, dass** das styrolhaltige Copolymer ausgewählt ist aus der Gruppe aufweisend Acrylnitril-Butadien-Styrol-Copolymer (ABS), Styrol-Butadien-Copolymer (SBC), Methylmethacrylat-Butadien-Styrol-Copolymer (MBS), Methylmethacrylat-Acrylnitril-Butadien-Styrol (MABS), weiter
**dadurch gekennzeichnet, dass** das styrolhaltige Copolymer in Form eines Polymerblends vorliegt, welches des Weiteren zumindest ein zweites organisches Polymer aufweist, insbesondere wobei das zweite organische Polymer ein Homopolymer ausgewählt aus der Gruppe aufweisend Polycarbonat und Polystyrol ist oder ein Copolymer von Styrol-Butadien-Copolymer (SBC) ist.

## Claims

1. A spherical hollow body having a diameter of from 37 mm to 45 mm, in particular a diameter of 39.7 mm to 40.75 mm, and a weight of from 2.5 g to 3.5 g, in particular a weight of 2.6 g to 2.85 g, comprising a shell and an inner hollow space, wherein the shell has a wall thickness of 0.2 mm to 1.3 mm, in particular 0.3 mm to 0.8 mm,
**characterized in that** the shell is free of celluloid and comprises at least one styrene-containing copolymer, wherein
the styrene-containing copolymer comprises olefin monomers, particularly butadiene monomers, wherein
the styrene-containing copolymer is selected from among the group comprising acrylonitrile-butadiene-styrene copolymer (ABS), styrene-butadiene copolymer (SBC), methyl methacrylate-butadiene-styrene copolymer (MBS) and methyl methacrylate-acrylonitrile-butadiene-styrene (MABS), wherein
the shell further comprises at least one second organic polymer, wherein the second organic polymer is a homopolymer selected from the group comprising polycarbonate and polystyrene or is a copolymer of styrene-butadiene copolymer (SBC).

2. The spherical hollow body according to claim 1,
**characterized in that** the styrene-containing copolymer has a Charpy impact strength per ISO 179 of 1 kJ/m² to 50 kJ/m², in particular 2 kJ/m² to 20 kJ/m², measured at 23°C.

3. The spherical hollow body according to at least one of the preceding claims,
**characterized in that** the styrene-containing copolymer has a modulus of elasticity per ISO 527 of from 1200 MPa to 3000 MPa, in particular from 1500 MPa to 2500 MPa.

4. The spherical hollow body according to at least one of the preceding claims,
**characterized in that** the styrene-containing copolymer has a density as per ISO 1183 of from 0.8 g/cm³ to 1.2 g/cm³, in particular from 1 g/cm³ to 1.1 g/cm³.

5. The spherical hollow body according to claim 1,
**characterized in that** the second organic polymer has a Charpy impact strength as per ISO 179 of from 1 kJ/m² to 10 kJ/m² and a Shore hardness pursuant to ISO 868 of 65 to 80D.

6. The spherical hollow body according to at least one of claims 1 or 5,
**characterized in that** the mixture ratio of the styrene-containing copolymer and the second organic polymer is 1:0.05 to 1:1, in particular 1:0.25 to 1:0.75.

7. The spherical hollow body according to at least one of the preceding claims,
**characterized in that** the shell comprises at least one further additive selected from among the group comprising fibers, wafers, spherical particles, inorganic and organic materials, in particular softeners and/or pigments.

8. A method for manufacturing a spherical hollow body in accordance with any one of the preceding claims, comprising the steps of:
- producing two substantially identical, substantially hemispherical half-shells by means of injection molding
- joining the two half-shells along their edges into a hollow body.

9. The manufacturing method according to claim 8,
**characterized in that** the two half-shells are joined by welding, in particular by ultrasonic welding, vibration welding, hot plate welding, laser welding or spin welding, or by adhesion.

10. The manufacturing method according to claim 8 or 9,
**characterized in that** a material thickening forming on the inside of the hollow body when the two half-shells are joined together exhibits an expansion in each direction of at the most five times, preferably at the most two-and-a-half times, further preferably at the most one-and-a-half times, the mean wall thickness of the hollow body.

11. The manufacturing method according to any one of claims 8 to 10,
**characterized by** the further step of further treating the hollow body, in particular by means of stamping, smoothing, irradiating, lapping, buffing, tumbling with inorganic, organic and/or polymer materials, irradiating with inorganic, organic and/or polymer materials, and/or coating with at least one soluble or insoluble material.

12. The manufacturing method according to claim 11,
**characterized in that** the further treating of the hollow body at least partly removes a material thickness having developed on the exterior of the hollow body upon the two half-shells being joined together.

13. A spherical hollow body produced in a manufacturing method according to any one of claims 8 to 12,
**characterized by** at least one of the following properties:
- circularity tolerance of a maximum 0.2 ± 0.06 mm,
- surface quality to the outer surface of between Rₐ = 1.0 and Rₐ = 5.0,
- difference in gyration radius center of gravity for the three x, y and z axes of a maximum 0.25 mm,
- outer diameter difference in different spatial directions of a maximum 0.3 mm.

14. The use of a styrene-containing copolymer for producing a celluloid-free spherical hollow body having a diameter of 37 mm to 45 mm and a weight of 2.5 g to 3.5 g,
**characterized in that** the styrene-containing copolymer is selected from among the group comprising acrylonitrile-butadiene-styrene copolymer (ABS), styrene-butadiene copolymer (SBC), methyl methacrylate-butadiene-styrene copolymer (MBS) and methyl methacrylate-acrylonitrile-butadiene-styrene (MABS), further
**characterized in that** the styrene-containing copolymer is in the form of a polymer blend which further comprises at least one second organic polymer, in particular wherein the second organic polymer is a homopolymer selected from the group comprising polycarbonate and polystyrene or is a copolymer of styrene-butadiene copolymer (SBC).

## Revendications

1. Corps creux sphérique avec un diamètre de 37 mm à 45 mm, en particulier avec un diamètre de 39,7 mm à 40,75 mm, et un poids de 2,5 g à 3,5 g, en particulier avec un poids de 2,6 g à 2,85 g, présentant une coque et une cavité interne, dans lequel la coque présente une épaisseur de paroi de 0,2 mm à 1,3 mm, en particulier de 0,3 mm à 0,8 mm,
**caractérisé en ce que** la coque est exempte de Celluloïd et présente au moins un copolymère contenant du styrène, dans lequel le copolymère contenant du styrène présente des monomères d'oléfine, en particulier des monomères de butadiène, dans lequel
le copolymère contenant du styrène est sélectionné à partir du groupe présentant un copolymère d'acrylonitrile-butadiène-styrène (ABS), un copolymère de styrène-butadiène (SBC), un copolymère de méthacrylate de méthyle-butadiène-styrène (MBS), un copolymère de méthacrylate de méthyle-acrylonitrile-butadiène-styrène (MABS), dans lequel la coque présente en outre au moins un deuxième polymère organique, dans lequel
le deuxième polymère organique est un homopolymère sélectionné à partir du groupe présentant un polycarbonate et un polystyrène ou est un copolymère à base de copolymère de styrène-butadiène (SBC).

2. Corps creux sphérique selon la revendication 1,
**caractérisé en ce que** le copolymère contenant du styrène présente une résistance au choc Charpy selon la norme ISO 179 de 1 kJ/m² à 50 kJ/m², en particulier de 2 kJ/m² à 20 kJ/m² mesurée à 23 °C.

3. Corps creux sphérique selon au moins l'une des revendications précédentes,
**caractérisé en ce que** le copolymère contenant du styrène présente un module d'élasticité selon la norme ISO 527 de 1 200 MPa à 3 000 MPa, en particulier de 1 500 MPa à 2 500 MPa.

4. Corps creux sphérique selon au moins l'une des revendications précédentes,
**caractérisé en ce que** le copolymère contenant du styrène présente une densité selon la norme ISO 1183 de 0,8 g/cm³ à 1,2 g/cm³, en particulier de 1 g/cm³ à 1,1 g/cm³.

5. Corps creux sphérique selon la revendication 1,
**caractérisé en ce que** le deuxième polymère organique présente une résistance au choc Charpy selon la norme ISO 179 de 1 kJ/m² à 10 kJ/m², et une dureté Shore D selon la norme ISO 868 de 65 à 80.

6. Corps creux sphérique selon au moins l'une des revendications 1 ou 5,
**caractérisé en ce que** la proportion de mélange du copolymère contenant du styrène et du deuxième polymère organique est de 1/0,05 à 1/1, en particulier de1/0,25 à 1/0,75.

7. Corps creux sphérique selon au moins l'une des revendications précédentes,
**caractérisé en ce que** la coque présente au moins un autre additif sélectionné à partir du groupe présentant des fibres, des plaquettes, des particules sphériques, des substances inorganiques et des substances organiques, en particulier des plastifiants et/ou des pigments de couleur.

8. Procédé destiné à la fabrication d'un corps creux sphérique selon l'une des revendications précédentes, lequel présente les étapes :
- de fabrication de deux demi-coques sensiblement identiques, sensiblement semi-sphériques par moulage par injection
- d'assemblage des deux demi-coques le long de leurs bords pour obtenir un corps creux.

9. Procédé de fabrication selon la revendication 8,
**caractérisé en ce que** l'assemblage des deux demi-coques s'effectue par soudage, en particulier par soudage aux ultrasons, soudage aux vibrations, soudage par éléments chauffants, soudage au laser ou soudage par rotation ou par collage.

10. Procédé de fabrication selon la revendication 8 ou 9,
**caractérisé en ce qu'**un épaississement de matériau survenant lors de l'assemblage des deux demi-coques sur la face interne du corps creux présente dans chaque direction un allongement d'au plus cinq fois, de préférence d'au plus deux fois et demie, plus préférablement d'au plus une fois et demie l'épaisseur de paroi moyenne du corps creux.

11. Procédé de fabrication selon l'une des revendications 8 à 10,
**caractérisé par** l'étape supplémentaire d'un traitement ultérieur du corps creux, en particulier par emboutissage, ponçage, irradiation, rodage, polissage, dessablage avec des substances inorganiques, organiques et/ou polymères, irradiation avec des substances inorganiques, organiques et/ou polymères et/ou revêtement avec au moins une substance soluble ou insoluble.

12. Procédé de fabrication selon la revendication 11,
**caractérisé en ce que** lors du traitement ultérieur du corps creux un épaississement de matériau survenant lors de l'assemblage des deux demi-coques sur la face interne du corps creux est au moins partiellement éliminé.

13. Corps creux sphérique, fabriqué par un procédé de fabrication selon l'une des revendications 8 à 12,
**caractérisé par** au moins l'une des propriétés suivantes :
- tolérance à la rondeur de 0,2 ± 0,6 mm maximum,
- finition de surface de la surface externe entre Rₐ = 1,0 et Rₐ = 5,0,
- différence des rayons d'inertie du centre de gravité pour les trois axes x, y et z de 0,25 mm maximum,
- différence du diamètre externe dans des directions spatiales différentes de 0,3 mm maximum.

14. Utilisation d'un copolymère contenant du styrène pour la fabrication d'un corps creux sphérique exempt de Celluloïd avec un diamètre de 37 mm à 45 mm et un poids de 2,5 g à 3,5 g,
**caractérisé en ce que** le copolymère contenant du styrène est sélectionné à partir du groupe présentant un copolymère d'acrylonitrile-butadiène-styrène (ABS), un copolymère de styrène-butadiène (SBC), un copolymère de méthacrylate de méthyle-butadiène-styrène (MBS), un copolymère de méthacrylate de méthyle-acrylonitrile-butadiène-styrène (MABS), en outre
**caractérisé en ce que** le copolymère contenant du styrène se présente sous la forme d'un mélange de polymères, lequel présente en outre au moins un deuxième polymère organique, en particulier dans lequel le deuxième polymère organique est un homopolymère sélectionné à partir du groupe présentant un polycarbonate et un polystyrène ou est un copolymère à base de copolymère de styrène-butadiène (SBC).
